# EUROPÄISCHE PATENTSCHRIFT

(11) **EP 0 477 404 B1**
(45) Veröffentlichungstag und Bekanntmachung des Hinweises auf die Patenterteilung: **08.03.1995**
(21) Anmeldenummer: 90118539.7
(22) Anmeldetag: 27.09.1990
(51) Int. Cl.: G01C 11/06, G01C 11/02

(54) **Verfahren zur Anlagendokumentation**
Method for documentation of industrial plants
Méthode pour la documentation d'installations industrielles

(43) Veröffentlichungstag der Anmeldung: 01.04.1992
(73) Patentinhaber: SIEMENS AKTIENGESELLSCHAFT, 80333 München (DE)
(72) Erfinder: Fraas, Karl-Christian, Dipl.-Ing., D-8501 Schwaig 2 (DE); Kamsties, Klaus-Dieter, Dipl.-Ing., D-8555 Adelsdorf (DE); Lockau, Jürgen, Dr.-Ing., D-8520 Erlangen (DE)

(56) Entgegenhaltungen:
- EP-A- 0 088 503
- EP-A- 0 364 614
- ATZ AUTOMOBILTECHNISCHE ZEITSCHRIFT, Band 91, Nr. 6, 1989, Seiten 341-342, 345-347; H. BRUHN et al.: "Fotogrammetrische Vermessung von Kraftfahrzeugen"
- THE GEC JOURNAL OF RESEACH, Band 6, Nr. 2, 1988, Seiten 80-95; D. MURRAY: "Strategies in object recognition"

## Beschreibung

Die Erfindung betrifft ein Verfahren zur Anlagendokumentation, wobei rohrförmige zylindrische Anlagenteile aus mindestens zwei Richtungen mit einem Fotoapparat fotografiert werden, der vor der Filmebene eine Meßgitterplatte aufweist, und wobei die gewonnenen Fotografien zumindest teilweise digitalisiert und dann mit der CAD-Methode ausgewertet werden.

Aus der Zeitschrift "Photogrammetrie und Fernerkundung", Heft 6/1988, ist ein Dokumentationsverfahren bekannt, bei dem ein Fotoapparat eingesetzt wird, der weitgehend einem handelsüblichen Modell entspricht. Dieser Fotoapparat unterscheidet sich von der handelsüblichen Version durch eine vor der Filmebene fest eingebaute Meßgitterplatte. Die Positionen der einzelnen Meßkreuze dieser Meßgitterplatte sind mit hoher Genauigkeit bekannt. Da die Meßkreuze bei jeder Filmbelichtung mit abgebildet werden, enthält jedes Bild ein dichtes Feld von Bezugspunkten. Damit lassen sich geometrische Auswirkungen von Filmunebenheiten während der Aufnahme und auch nach der Aufnahme auftretende Bilddeformationen korrigieren. Mit einem derartig ausgerüsten Fotoapparat kommt man für die Anlagendokumentation ohne Stereomeßkammer aus. Eine solche Stereomeßkammer, die beispielsweise für das Dokumentationsverfahren gemäß der EP-A 0 088 503 erforderlich ist, ist sehr schwer und kann daher nur mit großem Aufwand zwischen den Aufnahmeorten in der Anlage transportiert werden. Darüber hinaus ist die bekannte Stereomeßkammer gegenüber einem Fotoapparat sehr teuer.

Der aus "Photogrammetrie und Fernerkundung" bekannte mit einer Meßgitterplatte ausgerüstete Fotoapparat kommt sogar ohne Stativ aus, so daß die erforderlichen Fotografien in sehr kurzer Zeit ausgeführt werden können. Die zu dokumentierende Anlage braucht nur für kurze Zeit betreten zu werden.

Aus "Photogrammetrie und Fernerkundung" ist außerdem bekannt, daß die gewonnenen Fotografien digitalisiert werden, und daß im Bereich der Architekturvermessung das Datenmaterial mit der CAD-Methode ausgewertet wird. Man erhält mit diesen Verfahren 2-dimensionale Bilder aus unterschiedlichen Blickrichtungen.

Die als solche bekannte CAD-Methode ist beispielsweise in "Enzyklopädie Naturwissenschaft und Technik" beschrieben.

Mit den bekannten Verfahren zur Anlagendokumentation werden nur die Oberflächen von Anlagen und Anlagenteilen erfaßt. Die Fotografien werden nach Digitalisierung direkt mit der CAD-Methode bearbeitet.

Viele Anlagenteile, insbesondere Rohre, weisen jedoch einen äußeren Querschnitt auf, der sich von ihrem inneren Querschnitt unterscheidet. Das ist auf Unebenheiten des Anlagenteiles, insbesondere aber auf Unebenheiten einer in der Regel vorhandenen Isolierschicht auf dem Anlagenteil zurückzuführen. Mit den bekannten Verfahren werden alle diese Unebenheiten dokumentiert, obwohl sie für die weitere Bewertung der Anlage unwichtig sind.

In den meisten zu dokumentierenden Anlagen befindet sich ein strömendes oder ruhendes Medium. Bei Dokumentation nur der äußeren Form der Anlagenteile erhält man Anlagenformen, die auf die Isolierungsschicht zurückzuführen sind und die nicht denjenigen Formen entsprechen, die das Medium vorfindet. Diese inneren Formen sind jedoch allein für eine Dokumentation interessant, da die Dokumentation hauptsächlich als Grundlage für eine Sicherheitsüberprüfung der Anlage dienen soll.

Im Siemens Prospekt "Anlagendokumentation durch Photogrammetrie und CAD", Mai 1990, wird gesagt, daß Fotografien einer Anlage mit der CAD-Methode derartig ausgewertet werden sollen, daß 3-dimensionale Modellbilder entstehen.

Der Erfindung lag die Aufgabe zugrunde, ein Verfahren zur Anlagendokumentation anzugeben, das mit einem weitgehend handelsüblichen Fotoapparat auskommt und mit der CAD-Methode ein räumliches Bild zu erstellen gestattet, das 3-dimensional ist und die inneren Begrenzungen der Anlage dokumentiert, die für das Medium in der Anlage relevant sind. Äußere Unebenheiten von Anlagenteilen sollen die Dokumentation nicht verfälschen.

Die Aufgabe wird gemäß der Erfindung durch ein Verfahren mit den im Anspruch 1 angegebenen Merkmalen gelöst.

Dadurch, daß man die Mittellinie eines Anlagenteiles bewertet, beeinflussen äußere Unebenheiten des Anlagenteiles die Dokumentation nicht. Das trifft insbesondere für die Dokumentation von Rohrleitungen zu. Gerade bei Rohrleitungen kann durch Schwankungen einer Isolierschichtdicke eine Rohrbiegung vorgetäuscht werden. Mit dem Verfahren nach der Erfindung wird der Vorteil erzielt, daß ausschließlich der für das strömende Medium relevante Rohrverlauf dokumentiert werden kann.

Zum Bestimmen einer Mittellinie eines Anlagenteiles, das rohrförmig ist, werden mindestens zwei Punkte der Mittellinie bestimmt. Für jeden Punkt werden mindestens zwei Fotografien aus unterschiedlichen Richtungen aufgenommen. Zwei Fotografien reichen aus. Mit mindestens einer weiteren Fotografie lassen sich die Ergebnisse bestätigen. Diese Fotografien können dann punktweise, an den zu dokumentierenden Stellen, digitalisiert werden. Unter Digitalisieren versteht man z.B. das Bestimmen von Koordinaten. Anschließend werden zu einem bestimmten ausgewählten Oberflächenpunkt des Anlagenteils für einen Querschnitt des Anlagenteils durch diesen Punkt jeweils ein elliptisches Bild auf den Fotografien bestimmt. Ein solches Bild ist eine Ellipse, da der Querschnitt auf der Fotografie unter einer schräg zur Oberfläche des Anlagenteils gerichteten Blickrichtung erscheint. Bei einem in der Regel undurchsichtigen Anlagenteil ist nur die Hälfte der Ellipse sichtbar. Diese Hälfte wird um die fehlende Hälfte, z.B. graphisch, ergänzt. Der Schnittpunkt der Hauptachsen der Ellipse wird dann bestimmt und digitalisiert. Dieser Schnittpunkt gibt einen Hinweis auf einen Punkt der Mittellinie. Ein Schnittpunkt der Hauptachsen eines zweiten elliptischen Bildes wird auch auf einer zweiten Fotografie bestimmt. Da die Fotografien aus unterschiedlichen Richtungen aufgenommen wurden, ist aus den beiden Schnittpunkten der Ort eines Punktes der Mittellinie im 3-dimensinalen Raum zu bestimmen. Dazu wird als Punkt der Mittellinie der Schnittpunkt der Normalen, die auf den Fotografieebenen in den Schnittpunkten der Ellipsenachsen stehen, bestimmt. Auf die gleiche Weise wird mindestens ein zweiter Punkt der Mittellinie bestimmt. Die Mittellinie ist dann durch diese beiden Punkte bestimmt.

Man erhält auf diese Weise einen Verlauf der Mittellinie, der unabhängig ist von Unebenheiten der äußeren Oberfläche des Anlagenteiles.

Auf einem Anlagenteil, das keine Kante aufweist, ist eine Markierungseinrichtung angebracht. Erst dann wird das Anlagenteil fotografiert. Eine solche Markierung ist notwendig, damit Fotografien aus unterschiedlichen Richtungen eindeutig unterschieden werden können. Bei Anlagenteilen, die Ecken oder Kanten oder andere äußere Merkmale aufweisen, dienen diese Merkmale zur Identifikation der einzelnen Bilder. Bei runden Anlagenteilen, beispielsweise bei Rohren, ist eine solche Identifikation nicht möglich. Fotografien eines Rohres aus verschiedenen Richtungen sehen nämlich weitgehend gleich aus. Daher ist es notwendig, daß Markierungen auf dem Anlagenteil angebracht werden, die die Richtung, aus der fotografiert worden ist, eindeutig erkennen lassen. Besonders geeignet sind dazu aufklebbare Markierungsteile, die z.B. Nummern tragen.

Mit dem Verfahren nach der Erfindung wird der Vorteil erzielt, daß die für eine Sicherheitsüberprüfung relevante Struktur einer Anlage 3-dimensional dokumentiert wird. Ein solches Verfahren ist vorteilhafterweise in Kraftwerken, aber auch in Chemieanlagen, die sehr viele Rohrleitungen und Behälter enthalten, einsetzbar.

Gemäß einer vorteilhaften Ausgestaltung der Erfindung wird für einzelne Anlagenteile die Mittellinie einzeln bestimmt.

Die zwei Fotografien werden beispielsweise aus jeweils um 90° versetzter Richtung aufgenommen. Dabei ist die Meßgenauigkeit am größten. Der Winkel muß nicht immer 90° betragen.

Um den Verlauf der bestimmten Mittellinie an den tatsächlichen Verlauf der Mittellinie noch besser anpassen zu können, wird beispielsweise der Verlauf der zunächst bestimmten Mittellinie durch eine Fehlerbetrachtung weiter geglättet. Dazu dient z.B. die als solche bekannte Methode der kleinsten Fehlerquadrate.

Beispielsweise werden beim Bestimmen der Mittellinie eines Anlagenteiles, das die Form eines geraden Rohres hat, nur die Koordinaten in senkrecht zur Rohrachse gerichteten Achsen exakt bestimmt. Die Koordinate in Achsrichtung ist nicht so wichtig wie die übrigen Koordinaten, da Anfang und Ende des Rohres oder Rohrabschnittes durch die sich anschließenden Anlagenteile genau definiert sind. Mit dieser genannten Auswahl der Koordinaten wird der Vorteil erzielt, daß eine Ortsbestimmung in zwei Koordinaten ausreicht, um ein räumliches, 3-dimensionales Bild zu erzeugen.

Diese Vereinfachung ist nicht möglich bei der Dokumentation von gekrümmten Anlagenteilen. Da jedoch in einer zu dokumentierenden Gesamtanlage in der Regel sehr viele gerade Rohrleitungsabschnitte vorhanden sind, wird der Gesamtarbeitsaufwand mit dem genannten Verfahren deutlich verkleinert.

Die Markierungseinrichtung besteht beispielsweise aus einem Band, das auf dem Anlagenteil anzuordnen ist, und das Markierungsteile aufweist. Diese Markierungsteile sind beispielsweise numeriert.

Mit dem Verfahren nach der Erfindung wird der Vorteil erzielt, daß mit einfachen Mitteln eine Anlage ohne Rücksicht auf äußere Anformungen, wie Isolierschichten, dokumentiert werden kann, und daß mit einfachen Mitteln eine umfangreiche Anlage, die sehr viele Rohrleitungen enthalten kann, exakt, schnell und zuverlässig zu dokumentieren ist.

Das Verfahren gemäß der Erfindung werden anhand der Zeichnung näher erläutert:
- Figur 1: zeigt schematisch den Aufbau einer Einrichtung zur Anlagendokumentation, aus der auch der Verfahrensablauf ersichtlich ist.
- Figur 2: zeigt ein rohrförmiges Anlagenteil, das mit einer Markierungseinrichtung versehen ist.
- Figur 3: zeigt ein Markierungsteil als Bestandteil einer solchen Markierungseinrichtung.
- Figur 4: zeigt geeignete Aufnahmepositionen für ein Anlagenteil.

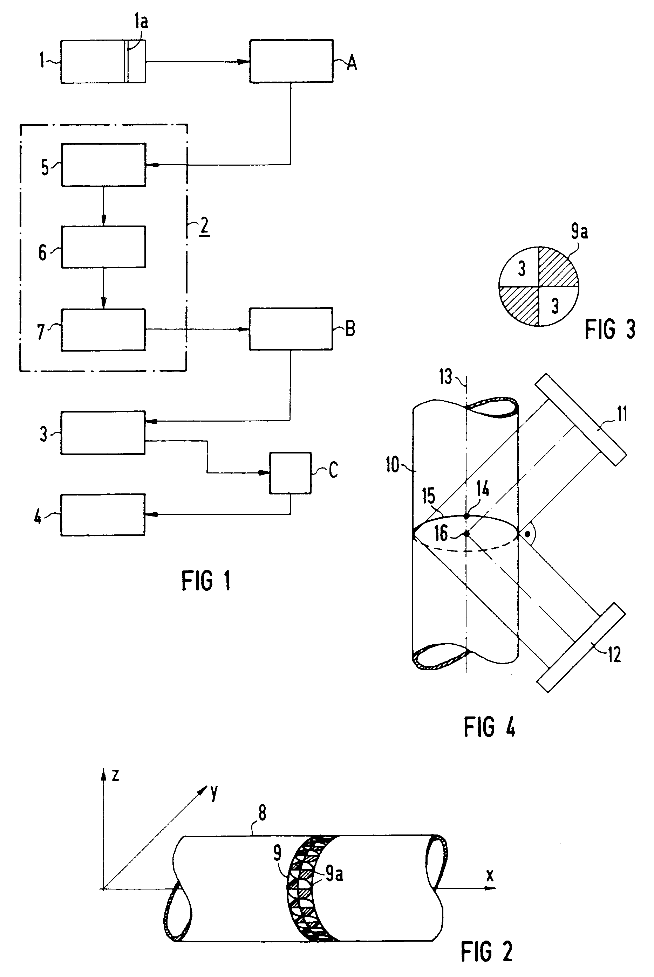

Eine Anlagendokumentation wird gemäß der Erfindung erstellt, indem nach Figur 1 zunächst mit einem handelsüblichen Fotoapparat 1, der vor der Filmebene eine Meßgitterplatte 1a aufweist, die zu dokumentierende Anlage aus mindestens zwei Richtungen fotografiert wird. Die gewonnenen Fotografien A werden in einer Schnittstelle 2 verarbeitet. Am Ausgang der Schnittstelle 2 stehen dann Ortskoordinaten B für verschiedene wesentliche Punkte der zu dokumentierenden Anlage an. Diese Koordinaten B werden einer der Schnittstelle 2 nachgeordneten CAD-Anlage 3 zugeleitet. Dort wird aus diesen Koordinaten B ein Modell C erstellt. Das Modell C kann auf einem Bildschirm 4 dargestellt werden, wobei Ansichten aus verschiedenen Blickrichtungen gezeigt werden können.

Die Schnittstelle 2 ist unterteilt in eine Digitalisierungsvorrichtung 5, eine Einrichtung 6 zur Bestimmung der Mittellinie 13 eines rohrförmigen Anlagenteiles 10 und eine Korrektureinheit 7. In der Digitalisierungsvorrichtung 5 wird jede Fotografie A zumindest teilweise in weiter zu verarbeitende Digitalwerte zerlegt. In der nachgeschalteten Einrichtung 6 werden nach Figur 4 zur Bestimmung der Mittellinie 13 zunächst zwei Punkte der Mittellinie 13 bestimmt. Für jeden Punkt werden mindestens zwei Fotografien A herangezogen, die einen Oberflächenpunkt 14 des Anlagenteils 10 zeigen. Eine Umfangslinie eines Querschnittes des Anlagenteils 10 durch den Oberflächenpunkt 14 ist auf beiden Fotografien jeweils als Ellipsenteilstück 15 dargestellt. Dort werden die Ellipsen vervollständigt und die Schnittpunkte der Hauptachsen jeder Ellipse auf der Fotografie markiert. Geraden durch die Schnittpunkte auf beiden Fotografien, senkrecht zur Fotografieebene schneiden sich in einem Punkt 16 der Mittellinie 13 des Anlagenteils 10. Die beiden Fotografien aus unterschiedlichem Blickwinkel ermöglichen eine räumliche Markierung des Punktes 16. Zwei auf diese Weise bestimmte Punkte 16 bestimmen dann die Mittellinie 13. Die Ellipse ist einfacher zu bestimmen, wenn durch den Oberflächenpunkt 14 eine Markierungseinrichtung 9 nach Figur 2 verläuft.

Es wird der exakte Verlauf der Mittellinie 13 aus den beobachteten Verläufen der äußeren Begrenzungen des Anlagenteiles 10 bestimmt. Dabei werden Einflüsse der Wanddicke des Anlagenteiles 10 beseitigt.

In der nachgeschalteten Korrektureinrichtung 7 nach Figur 1 wird der bereits bestimmte Verlauf der Mittellinie 13 mit der als solchen bekannten Methode der kleinsten Fehlerquadrate weiter geglättet.

Das Modell C, das auf dem Bildschirm 4 gezeigt werden kann, entspricht weitgehend dem tatsächlichen Verlauf von Rohrleitungen und auch dem tatsächlichen Aufbau der zu dokumentierenden Anlage.

Falls ein Anlagenteil keine Kanten aufweist, sind Fotografien A aus verschiedenen Richtungen nur schwer voneinander zu unterscheiden. Das gilt insbesondere bei Rohrleitungen. Um Abhilfe zu schaffen, ist ein solches rundes Anlagenteil 8 nach Figur 2 noch bevor Fotografien gemacht werden, mit einer Markierungseinrichtung 9 auszustatten. Diese Markierungseinrichtung 9 besteht aus einem Band, das auf einem Umfang des runden Anlagenteiles 8 anzuordnen ist. Es kann beispielsweise aufgeklebt werden. Auf dem Band befinden sich einzelne numerierte Markierungsteile 9a, so daß sich verschiedene Fotografien A des gleichen Anlagenteiles 8 dadurch unterscheiden, daß andere numerierte Markierungsteile 9a sichtbar sind. Ein Beispiel für ein solches numeriertes Markierungsteil 9a auf der Markierungseinrichtung 9 ist in Figur 3 gezeigt. Auf der Markierungseinrichtung 9 wird meistens eine fortlaufende Numerierung gewählt.

Zur weiteren Vereinfachung der Anlagendokumentation kann nach Figur 2 bei geraden, rohrförmigen Anlagenteilen das Koordinatensystem, das zum Bestimmen des Modells C aus den Fotografien A erforderlich ist, so gelegt werden, daß eine Achse, z.B. die X-Achse, des Koordinatensystems mit der Achse des rohrförmigen, runden Anlagenteiles 8 zusammenfällt. Die Lage des Koordinatensystems ist in Figur 2 dargestellt. Die Richtung des runden Anlagenteiles 8 nach Figur 2 ist zwischen zwei benachbarten Krümmern oder Armaturen bereits durch die X-Achse bestimmt. Daher müssen nur zwei Koordinaten, nämlich die y-Achse und die z-Achse ausgewertet werden. Da in einer üblichen zu dokumentierenden Anlage, insbesondere einer Chemieanlage, sehr viele geradlinige Rohrleitungsabschnitte vorhanden sind, wird somit der Arbeitsaufwand für die Dokumentation deutlich eingeschränkt.

Die erforderlichen Fotografien A werden beispielsweise aus jeweils um 90° versetzter Richtung aufgenommen. Zwei Aufnahmepositionen bezüglich eines Anlagenteiles 10 sind in Figur 4 gezeigt. Dabei sind zwei Positionen des Fotoapparates 1 anhand der Positionen der zu belichtenden Filmabschnitte 11 und 12 gezeigt. Die Filmabschnitte (Fotografien) 11 und 12 bilden zum Anlagenteil 10 einen Winkel von 45° und zueinander einen Winkel von 90°.

Mit dem gezeigten Verfahren können Anlagen mit hoher Belegungsdichte (viele Rohrleitungen auf engem Raum), insbesondere Kraftwerke oder Chemieanlagen, schnell und zuverlässig mit einfachen Mitteln dokumentiert werden. Die Anlagen brauchen dazu nur kurzzeitig betreten zu werden, wodurch der Betrieb der Anlage nur unwesentlich gestört wird. Das Modell C gestattet auf das Wesentliche beschränkte Ansichten der Anlage aus verschiedenen Richtungen.

## Patentansprüche

1. Verfahren zur räumlichen Anlagendokumentation, wobei rohrförmige zylindrische Anlagenteile (8, 10) aus jeweils mindestens zwei Richtungen mit einem Fotoapparat (1) fotografiert werden, der vor der Filmebene eine Meßgitterplatte (1a) aufweist, und wobei die gewonnenen Fotografien (A) zumindest teilweise digitalisiert und dann mit der CAD-Methode ausgewertet werden,
**dadurch gekennzeichnet,** daß die Mittellinien der jeweiligen Anlagenteile bestimmt werden, daß am Umfang eines Anlagenteils (8) eine Kante vorhanden ist oder eine Markierungseinrichtung (9) angebracht wird, auf denen ein ausgewählter Oberflächenpunkt (14) liegt, und durch welche eine Umfangslinie erfaßbar ist, daß zum Bestimmen der Mittellinie (13) des jeweiligen Anlagenteiles (10) mindestens zwei Punkte (16) der Mittellinie (13) bestimmt werden, indem zum Bestimmen eines Punktes (16) mindestens zwei Fotografien (A) aus unterschiedlichen Richtungen aufgenommen werden, daß für den ausgewählten Oberflächenpunkt (14) des Anlagenteiles (10) jeweils ein elliptisches Bild einer Perspektivansicht eines Querschnittes des Anlagenteiles (10) durch diesen Oberflächenpunkt (14) auf den Fotografien (11, 12) bestimmt wird, daß die Schnittpunkte der Ellipsen-Hauptachsen für jedes Bild des Querschnittes bestimmt werden, und daß durch Geraden, die senkrecht zu den Fotografieebenen (11, 12) zum Aufnahmezeitpunkt durch diese Schnittpunkte angeordnet werden, ein Punkt der Mittellinie (13) als Schnittpunkt der Geraden räumlich bestimmt wird, und daß aus dem Verlauf der jeweiligen Mittellinien (13) mit der CAD-Methode ein räumliches Bild (Modell C) ) der Anlage erstellt wird.

2. Verfahren nach Anspruch 1,
**dadurch gekennzeichnet,** daß für einzelne Anlagenteile (8, 10) die Mittellinie (13) einzeln bestimmt wird.

3. Verfahren nach Anspruch 1 oder 2,
**dadurch gekennzeichnet,** daß drei Fotografien (A) aus jeweils um 90° versetzter Richtung aufgenommen werden.

4. Verfahren nach einem der Ansprüche 1 bis 3,
**dadurch gekennzeichnet,** daß der bestimmte Verlauf der Mittellinie (13) durch eine Fehlerbetrachtung weiter geglättet wird.

5. Verfahren nach Anspruch 4,
**dadurch gekennzeichnet,** daß der Verlauf der zunächst bestimmten Mittellinie (13) mit der Methode der kleinsten Fehlerquadrate weiter geglättet wird.

6. Verfahren nach einem der Ansprüche 1 bis 5,
**dadurch gekennzeichnet,** daß beim Bestimmen der Mittellinie (13) eines Anlagenteiles (8, 10), das die Form eines geraden Rohres hat, nur die Koordinaten in senkrecht zur Rohrachse x gerichteten Achsen y, z exakt bestimmt werden.

7. Verfahren nach einem der vorhergehenden Ansprüche,
**dadurch gekennzeichnet,** daß als Markierungseinrichtung (9) ein Band verwendet wird, das auf dem Anlagenteil (8) anzuordnen ist, und das Markierungsteile (9a) aufweist.

## Claims

1. Method for spatial system documentation, wherein tubular cylindrical system parts (8, 10) are photographed from at least two directions in each case with a camera (1) which has a measuring grid plate (1a) in front of the film plane, and wherein the photographs (A) obtained are at least partially digitised and are then evaluated using the CAD method, characterised in that the centre lines of the respective system parts are determined, in that, on the circumference of a system part (8), there is an edge present or there is a marking device (9) attached, on which edge or marking device there is located a selected surface point (14) and by means of which a circumferential line can be detected, in that, for determining the centre line (13) of the respective system part (10), at least two points (16) on the centre line (13) are determined, with at least two photographs (A) being taken from different directions in order to determine a point (16), in that, for the selected surface point (14) on the system part (10), there is determined a respective elliptical image of a perspective view of a cross-section of the system part (10) through this surface point (14) on the photographs (11, 12), in that the intersections of the main axes of the ellipse are determined for each picture of the cross-section, and in that, by means of straight lines arranged perpendicularly to the planes (11, 12) of the photographs at the picture-taking point through these intersections, a point on the centre line (13) is determined spatially as an intersection of the straight lines, and in that, from the course of the respective centre lines (13), a spatially image (model (C)) of the system is prepared using the CAD method.

2. Method according to claim 1, characterised in that the centre line (13) is determined individually for individual system parts (8, 10).

3. Method according to claim 1 or 2, characterised in that three photographs (A) are taken from directions which are mutually offset by 90°.

4. Method according to one of claims 1 to 3, characterised in that the determined course of the centre line (13) is further smoothed by error observation.

5. Method according to claim 4, characterised in that the course of the initially determined centre line (13) is further smoothed using the method of least error squares.

6. Method according to one of claims 1 to 5, characterised in that, in the case where the centre line (13) of a system part (8, 10) which has the shape of a straight pipe is being determined, only the coordinates in axes y, z perpendicular to the pipe axis x are determined exactly.

7. Method according to one of the preceding claims, characterised in that a tape which is to be arranged on the system part (8) and which has marking elements (9a), is used as a marking device (9).

## Revendications

1. Procédé pour obtenir des images spatiales d'une installation, selon lequel on photographie des parties tubulaires cylindriques (8,10) de l'installation dans respectivement deux directions à l'aide d'un appareil photographique (1), qui possède, en avant du plan de la pellicule, une plaque (1a) portant une grille de mesure, et selon lequel on numérise, au moins partiellement, les photographies obtenues (A) et ensuite, on les évalue au moyen du procédé CAO,
caractérisé par le fait qu'on détermine les lignes médianes des parties respectives de l'installation, que sur la périphérie d'une partie (8) de l'installation est présente un bord sur lequel est prévu un dispositif de marquage (9), sur lequel est situé un point sélectionné (14) de la surface, et au moyen duquel peut être détectée une ligne circonférentielle, que pour la détermination de la ligne médiane (13) de la partie respective (10) de l'installation, on détermine au moins deux points (16) de la ligne médiane (13) par le fait que, pour la détermination d'un point (16), on prend au moins deux photographies (A) dans des directions différentes, que pour le point sélectionné (14) à la surface de la partie (10) de l'installation, on détermine respectivement une image elliptique d'une vue en perspective d'une section transversale de la partie (10) de l'installation au moyen de ce point (14) de la surface, sur les photographies (11,12), qu'on détermine les points d'intersection des axes principaux de l'ellipse pour chaque image de la section transversale et qu'à l'aide de droites, qui sont tracées perpendiculairement au plan des photographies (11,12), a l'instant d'enregistrement et passent par ces points d'intersection, on détermine spatialement un point de la ligne médiane (13) en tant que point d'intersection des droites, et qu'à partir de la forme des lignes médianes respectives (13), on établit, au moyen du procédé CAO, une image spatiale (modèle C) de l'installation.

2. Procédé suivant la revendication 1, caractérisé par le fait qu'on détermine la ligne médiane (13) individuellement pour des parties individuelles (8,10) de l'installation.

3. Procédé suivant la revendication 1 ou 2, caractérisé par le fait qu'on enregistre trois photographies (A) dans des directions réciproquement décalées de 90°.

4. Procédé suivant l'une des revendications 1 à 3, caractérisé par le fait qu'on lisse à nouveau une allure déterminée de la ligne médiane (13) au moyen d'une prise en compte d'erreurs.

5. Procédé suivant la revendication 4, caractérisé en ce qu'on lisse à nouveau l'allure de la ligne médiane (13) tout d'abord déterminée, en utilisant la méthode des moindres carrés d'erreur.

6. Procédé suivant l'une des revendications 1 à 5, caractérisé par le fait que lors de la détermination de la ligne médiane (13) d'une partie (8,10) de l'installation, qui possède la forme d'un tube rectiligne, on détermine de façon précise uniquement les coordonnées suivant des axes y,z perpendiculaires à l'axe x du tube.

7. Procédé suivant l'une des revendications précédentes, caractérisé par le fait qu'on utilise comme dispositif de marquage (9) une bande, qu'il faut disposer sur la partie (8) de l'installation et qui possède des divisions de marquage (9a).
